# EUROPEAN PATENT APPLICATION

(11) **EP 1 471 100 A1**
(43) Date of publication of application: **27.10.2004**
(21) Application number: 04252231.8
(22) Date of filing: 16.04.2004
(51) Int. Cl.: C08J 7/18, C08J 7/04, G02B 1/10, C09D 4/00, G09B 29/06, A47G 1/06

(54) **A protective film for glazing**

(30) Priority: 25.04.2003 US 465636 P
(71) Applicant: CPFilms Inc., Fieldale, Virginia 24089 (US)
(72) Inventor: Barth, Steven A., Martinsville, Virginia 24112 (US); Enniss, James P., Martinsville, Virginia 24112 (US); Jarrett, William Dean, Martinsville, Virginia 24112 (US); Kaliser, David Newton, Oak Ridge, North Carolina 27310 (US)
(74) Representative: Stanley, Michael Gordon

(57) **Abstract**

A transparent protective film composite 10 , particularly useful as a fade protector, for laying over glazing 22 held in a frame 23 and comprising a UV absorbing transparent polymeric film layer 11 coated on at least one side with a transparent coating 13 containing microparticles 35 of a nominal standard size and which protrude out of the coating 13 by at least 0.5 microns.

## Description

### Field

This invention relates to a protective film for use with glazing and in particular for film used with glazing held within a frame to display documents or pictures.

### Background of the Invention

The protection of framed documents or pictures from the ravages of light typically involves the use of conservation glass which is expensive. More recently the present assignee has introduced a Do-it-yourself (DIY) framing film that blocks out harmful UV radiation. Such films reduce fading and control glare when applied to the glass in picture frames. The film includes a UV absorbing PET ( polyethylene terephthalate) layer about 4 mil (0.1mm) thick which is laid against the glass. The smooth clear PET film when set against glass without the use of adhesives may result in the appearance of Newton's Rings on the surface In practice there is small air gap of variable thickness between the PET and glass and the rings are concentric rings of light and dark caused by reflections from the PET/air gap interface and the air gap /glass interface when the air gap is in the order of multiples of λ/4 and λ/2 where λ is the wavelength of light (approx 550 nm). That is a gap of less than about ½ micron.

The present invention provides a protective PET film which suppresses the phenomenon of Newton Rings when laid against glazing

### Statements of Invention

According to the present invention there is provided a transparent protective film composite for laying over glazing, the composite comprising a transparent polymeric film having at least one film layer coated on at least one side with a transparent coating containing microparticles of a nominal standard size and which protrude out of the coating by at least 0.5 microns.

The protruding particles space the protective film from the glazing material in such a manner that the formation of Newton rings is suppressed.

The film may comprise a UV absorbing polymeric film and/or the film may comprise a laminate of film layers adhered together by an adhesive containing a UV absorber.

The UV absorbing polymeric film layer may comprise one of polycarbonate, acrylic, polypropylene and PET , the preferred film being PET. This protects documents and photographs against fade. The UV absorbing PET film is as disclosed in US Patent 6 221 112 and blocks up to 99% of UV-A (320-400nm) and UV-B (280-320 nm) rays.

The coating is preferably a hard coat, preferably a UV cured acrylate resin coating having a dispersion of microparticles therein which comprise less than 0.05% of the weight of the coating, and preferably between 0.025-0.035 % by weight of the coating when dry. At the preferred lower concentration of microparticles, the coating remains relatively clear with haze of 1% or less and with high gloss having a 60 degree gloss of over 100 gloss units. Concentrations of microparticles higher than 0.05% continue to eliminate the Newton rings but significant and undesirable haze is introduced into the coating.

In the preferred embodiment the hard coat has a thickness of between 2.4 - 2.8 microns and the microparticles have a diameter of 3.5-4.5 microns.
The hard coat may also contain a nanoparticle dispersion therein. Nanoparticles should have a size of less than 0.1 1 microns diameter.

The microparticles preferably comprise mineral oxide is preferably a silica, and the nanoparticles may also comprise the same or a different mineral oxide and are preferably also silica. Other suitable nanoparticles ,described in US 6440,551, may also be used.

The other surface of the polymeric film layer may also be coated in a hard coat, preferably of the type described above so that the PET film may be utilised either way up. This removes the need for a protective mask on one side of the film. In an alternative construction the other surface of the film layer may be treated with an anti-glare hard coat as is described in US Serial number 10/389,083 the contents of which are hereby incorporated into the present invention. The anti - glare hard coating has a 60 degree gloss of 80 - 100 gloss units and preferably 85-95 gloss units, a haze of less than 12% and preferably 9-11% and scratch resistance to 0000 steel wool.

According to another aspect of the invention there is provided a glazed frame for mounting a picture, document etc and which comprises a frame , a sheet of glazing mounted in the frame, a backing board holding the glass and picture in the frame, and a fade protector clamped between a portion of the frame and the exposed surface of the glazing, the fade protector comprising a transparent UV absorbing polymeric film composite coated on at least its side adjacent the glazing with a transparent coating containing microparticles which protrude out of the coating by at least 0.5 microns.

Glazing includes any suitable transparent sheet material which may be used for insertion into a surrounding frame for covering a document, picture etc. and examples of which include glass, acrylic sheet, polyester sheet, polycarbonate sheet.

The thickness of the PET film increases with the size of the frame. The thickness T of the film is related to the diagonal dimension D of the frame such that D/T lies between 2±1 x 10³ so that for example:
a) frames smaller than 4" x 6" (100mm X 150mm) use 4 mil thick film (0.10mm)
b) frames from 5" X 7" ( 125mm X 175mm) to 11" X 14" (225mm X 350mm) use 7 mil ( 0.175mm) thick film , and
c) frames larger than 11" X 14" use 10 mil (0.25mm) thick film for example 16"X20"

Yet another aspect of the invention provides a method of protecting a glazed frame mounted document from the ravages of light using a fade protector comprising a transparent UV absorbing polymeric film composite having a thickness such that the film in use remains substantially flat against the glazing when clamped between a portion of the frame and glazing, the film composite having at least one layer coated on its side in use adjacent the glazing with a transparent hard coating containing particles which protrude out of the coating by at least 0.5 microns, wherein in said method the glazing is removed from the glazed frame, the fade protector is placed against a surface of the glazing which is then re-assembled in the frame with the fade protector clamped adjacent the external surface of the glazing with the hard coat facing inwards.

### Description of the Drawings

The invention will be described by way of example and with reference to the accompanying drawings in which :
- Fig. 1: is a cross-section through a protective film composite according to the present invention,
- Fig. 2: is a cross-section through a picture frame showing the UV protector in use, and
- Fig. 3: illustrates the microparticles spacing the film composite form the glazing.

### Detailed Description of the Invention

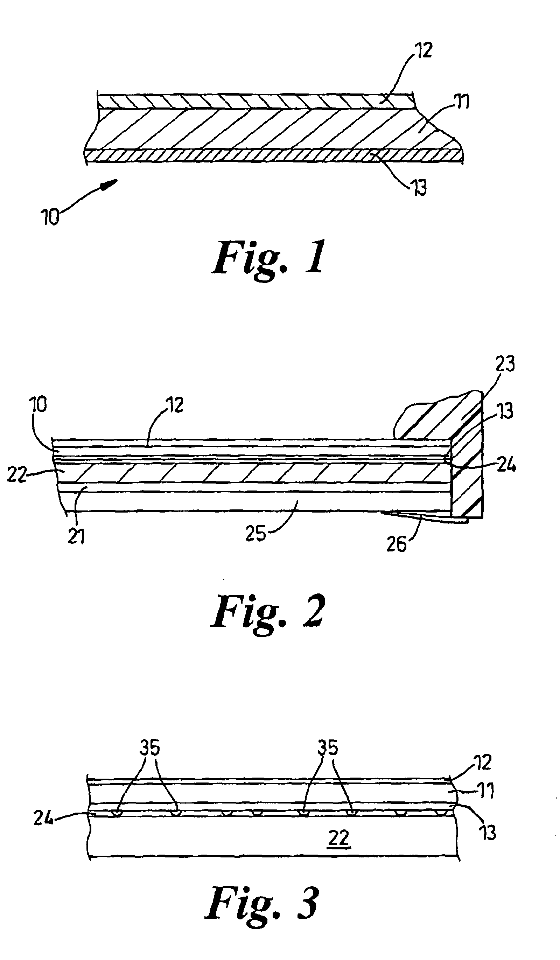

With reference to Fig 1 and Fig. 2 there is shown a protective film composite 10 comprising a suitable transparent polymeric film layer 11 including a UV absorber. The film composite 10 in use will be placed against glazing 22 particularly but not exclusively within a frame 23. A suitable transparent film is a polyester film, preferably a polyethyleneterephthalate (PET) film treated with a UV absorber as described in US patent 6221 112B so as to absorb up to 99% of UV radiation. A suitable PET film is DuPont Teijin Films' Melinex 454 or LJX 112.

In order to prevent the formation of Newton rings when the film layer 11 is overlaid on the glazing 22, the PET film layer 11 is provided with a first scratch resistant hard coat 13 on one side which in use lies adjacent the glazing. Conveniently, the PET film layer 11 is also provided with a second hard coat 12 on the side away from the glazing 22 . The second hard coat may comprise an anti glare coating 12 as is described in US Patent Application Serial 10/389,093 or alternatively may be similar or identical with the first hard coat 13 and provide the desired scratch resistance.

The first hard coat 13 adjacent the glazing 22 is formed from a UV cured acrylate based resin which contains a dispersion of microparticles of a mineral oxide, for a transparent and colourless coating, silica is preferred but other metal oxides may be used for tinted coatings (see for example the use of metal oxides disclosed in the applicants US Patent 6440 551). The particle size will be such that the microparticle will protrude above the surface of the coating when dry, and typically for a hard coat thickness of between 2.4-2.8 microns the microparticles should have a diameter of between 3.5-5.0 microns, preferably 3.5-4.5 microns and more preferably 4.5 microns. The weight percent of microparticles present in the coating is less than 0.05% by weight of the dry coating and preferably about 0.035% by weight of the coating. A suitable micro particle is Tospearl available from Toshiba Silicone Co. Ltd. Other combinations of film thickness and microparticle diameter will be effective in eliminating Newton Ring defects providing the particles protrude from the surface by at least 0.5 microns. For example, 3 micron particles in a hardcoat of 1.5 -2.2 microns dry film thickness provide an even airspace between the coating and the glass and avoid the appearance of Newtons Rings.

The hard coat 13 may also include a dispersion of 20 - 25% by weight of nanoparticles of silica in the UV-cured polymeric resin. Nanoparticles have a particle size of 0.1 microns or less. In this coating composition however the nanoparticles remain stably dispersed during film formation, drying and UV curing and do not make any significant contribution to haze or reduction in gloss. The nanoparticles are added to increase hardness and scratch resistance if required.

The hard coat has the following typical physical properties:
Haze < 12%, more preferably 9 - 11 %
Gloss 60 degree gloss 80 - 100 gloss units, more preferably 85-95 gloss units Scratch resistant to 0000 Steel Wool
The Gloss was measured using a Byk Gardner Glossmeter.
The haze was measured using a Hunter Laboratories Ultrascan XE and calculated according to (Diffuse Transmittance/Total Transmittance) X 100 over a light range of 380-780 nm.
The abrasion test is a subjective test in which the coating is rubbed with steel wool and viewed for haze.

The anti - glare hard coat 12 may also comprise a dispersion of 20-25% by weight of nanoparticles of silica in the UV-cured polymeric resin.

In the preferred embodiment with the second hard coat 12 comprising the same formulation as the first hard coat 13 , the protective film composite 10 may be used with either side against the glazing.

In an alternative embodiment the UV absorber may be added to the hard coat 12,13 and/ or the anti-glare hard coat 13. The anti-fade film layer 11 may be replaced by a laminate comprising two of more layers of PET film laminated together by us of an adhesive containing a UV absorber.
With reference to Fig. 2. there is shown a glazed frame 23 for mounting a picture 21, document, photograph etc. which requires protection from light. The glazing 22 which covers the picture 21 within the frame in this example is a sheet of glass and has a protector film composite 10 placed over the glass. The composite 10 is a fade protector 10 and is clamped between the edge of the frame and the glass 22 and is held in location by a back board 25. The thickness of the PET should be sufficient to hold the composite against the glass across substantially the whole area of the film.

The thickness of the PET layer 11 will vary according to the size of the frame 23. The PET film is produced in standard thicknesses of 4, 7 & 10 mil (100, 175, 250 microns) and the thickness T of the film used is a compromise of what would be an ideal thickness for a particular diagonal dimension D of a frame and what standard materials are available. The film thickness is given by the formula D/T lies in range 2±1 x 10³ , f or example for standard frame sizes of :
a) frames smaller than 4" x 6" (100mm X 150mm) use 4 mil thick Film (0.10mm )
b) frames from 5" X 7" (125mm X 175mm) to 11" X 14" (225mm X 350mm) use 7 mil ( 0.175mm) thick film , and
c) frames larger than 11" X 14" use 10 mil (0.25mm) thick film for example 16" X 20"

In practice a small air gap 24 will be present between the protective film 10 and the glass 23. In order to prevent the phenomenon of Newton rings being visible within the protective film/glass combination, the film is laid with the first hard coat 13 adjacent the glass. As can be seen in Fig. 3, the protruding micoparticles 35 help air to escape from between the two surfaces and also help to maintain a substantially even gap 24 between the PET film 11 and the glass 22 having a thickness of at least ½ micron and thereby preventing the formation of Newton rings.

Where the second coating 12 is an anti-glare coating 12, it faces outwards.
The fade protector 10 as well as protecting the picture 21 from UV radiation will physically protect the glazing and (if the glazing is glass) should the glass crack or shatter will help hold the glass safely in the frame until a repair can be carried out.

A glazed frame 23 is dismantled to remove the glass prior to the application of the fade protector 10. The fade protector 10 is then laid over the glass and the glass reassembled in the frame. The picture is then held in place by a backing board 25 and clips 26.

A thin layer of resilient foam material may be placed at the back of the frame to bias the glass towards the fade protector.

The coating used for hard coat layer 12 is formed from a liquid composition which is applied to the surface of the PET film by a reverse gravure process. The coating composition may comprise a resin and solvent base as is described in US 4 557 980 and may include :

| | |
|---|---|
| Silica micro particles | 0.035-0.060% |
| Silica nanoparticles | 15-22% |
| Acrylate resin | 43-57% |
| Solvent | 22-36 |
| Photointiator | 2.4-2.8 % |
| Surfactant | 0.05-0.2% |

The percentages are weight percentages of the coating mixture.

A suitable silica nanoparticle dispersion is Highlink 502-31 available from Clariant The acrylate resin is preferably a mixture of 0-7% hexanedioldiacrylate and 40-50% of a penta aerythritol tetraacrylate and triacrylate mixture. The percentages are based on the total composition. Suitable materials are respectively Sartomer SR-238 and Sartomer SR-295 available from Sartomer (Total). A suitable surfactant is Fluorad FC 430 available from 3M Corporation.

The ingredients for the coating are mixed together and is the stable mixture is stored for later use.The clear stable coating composition is applied in a thickness of about 4 - 6 microns and coats evenly and levels smoothly. After application to the PET film the coating remains stable until the drying and curing stages.The microparticles then protrude from above the surface of the dried coating.
The final cured dried coating thickness is about 2.4 -2.8 microns.

A UV absorber may be added to the above coating composition for the hardcoat 12 or 13, and a suitable UV absorber package is a combination of:
1.0 - 4.0% a benzotriazole ( typically 3.5%)
0.05- 0.2% HALS stabiliser (typically 0.1%)
( a suitable benztriazole is Tinuvin 928 and a suitable stabiliser is Tinuvin 123 both available from CIBA Speciality Chemicals).

Alternative or additional UV protection may be provided by the use of UV absorbing or reflecting nanoparticles such as Titanium dioxide, Zinc oxide and Iron oxide which may be included in the hard coat composition. For example if the areal concentration of Zinc oxide is about 0.6g/square meter the UV transmission is reduced from 68% to about 3%.

## Claims

1. A transparent protective film composite (10) for laying over glazing (22) and comprising a transparent polymeric film (11) having at least one film layer (11) coated on at least one side with a transparent coating (13) **characterised in that** the coating (13) contains microparticles (35) of a nominal standard size and which protrude out of the coating by at least 0.5 microns.

2. A composite as claimed in Claim 1 **characterised in that** the polymeric film (11) comprises a transparent UV absorbing polymeric film.

3. A composite as claimed in Claim 1 or Claim 2 **characterised in that** the film (11) comprises a plurality of film layers laminated together using an adhesive containing a UV absorber.

4. A film composite as claimed in any one of Claims 1 to 3, **characterised in that** the coating (13) is a hard coat.

5. A film composite as claimed in Claim 4, **characterised in that** the hardcoat (13) comprises a UV cured acrylate resin.

6. A film composite as claimed in any one of Claims 1 to 5, **characterised in that** the coating (13) includes a UV absorber.

7. A film composite as claimed in any one of Claims 1 to 6, **characterised by** the coating (13) having a dispersion of microparticles (35) therein which comprise less than 0.05% of the weight of the coating when dry.

8. A film composite as claimed in Claim 7, **characterised in that** the microparticles (35) are between 0.025-0.035 % by weight of the coating when dry.

9. A film composite as claimed in any one of Claims 1 to 8, **characterised in that** the microparticles (35) comprise mineral oxide.

10. A film composite as claimed in Claim 9 or Claim 10 when dependant upon Claim 9, **characterised in that** the coating (13) is a transparent coating having a haze of 1% or less and with high gloss having a 60 degree gloss of over 100 gloss units.

11. A film composite as claimed in any one of Claims 1 to 10 , **characterised in that** the coating (13) has a thickness of between 2.4 - 2.8 microns and the microparticles have a diameter of between 3.5-4.5 microns.

12. A film composite as claimed in any one of Claims 1 to 11, **characterised in that** the coating (13) further contains a nanoparticle dispersion.

13. A film composite as claimed in Claim 11, **characterised in that** the nanopartices comprise nanoparticles of a UV absorbing or reflecting mineral oxide.

14. A film composite as claimed in any one of Claims 1 to 13, wherein the other surface of the polymeric film is coated with a hard coat (12).

15. A film composite as claimed in any one of Claims 1 to 13, **characterised in that** the other surface of the polymeric film is coated with an anti-glare hard coat (12).

16. A film composite as claimed in Claim 15, **characterised in that** the anti-glare hard coat (12) also contains a UV absorber.

17. A glazed frame for mounting a picture, document etc and which comprises a frame (23), a sheet of glazing (22) mounted in the frame (23), a backing board (25) holding the glazing (22) and picture in the frame (23), and a fade protector (10) clamped between a portion of the frame and the exposed surface of the glazing, the fade protector (10) being a transparent polymeric film composite (10) as claimed in Claim 2 or Claim 3, or any Claim depending therefrom.

18. A fade protector as claimed in Claim 17, wherein the film comprises PET film having a thickness T related to the diagonal dimension D of the frame such that D/T lies between 2±1 x 10³.

19. A method of protecting a glazed frame mounted document from the ravages of light using a fade protector comprising a transparent UV absorbing polymeric film composite as claimed in Claim 2 or Claim 3 or any Claim depending therefrom and having a thickness such that the film composite in use remains substantially flat against the glazing when clamped between a portion of the frame and glazing, the fade protector being placed against a surface of the glazing which is then re-assembled in the frame with the fade protector clamped adjacent the external surface of the glazing with the hard coat facing inwards.
